# EUROPÄISCHE PATENTANMELDUNG

(11) **EP 1 158 490 A1**
(43) Veröffentlichungstag der Anmeldung: **28.11.2001**
(21) Anmeldenummer: 00110531.1
(22) Anmeldetag: 17.05.2000
(51) Int. Cl.: G10L 15/26

(54) **Verwaltung von Spracherkennungsergebnissen**

(71) Anmelder: Grots, Jürgen Alexander, UB82BG Middlesex (GB); Goldbeck, Dirk David, 81927 München (DE); Sykora, Thomas, 97616 Bad Neustadt (DE)
(72) Erfinder: Grots, Jürgen Alexander, UB82BG Middlesex (GB); Goldbeck, Dirk David, 81927 München (DE); Sykora, Thomas, 97616 Bad Neustadt (DE)
(74) Vertreter: Grünecker, Kinkeldey, Stockmair & Schwanhäusser Anwaltssozietät

(57) **Zusammenfassung**

Die Erfindung betrifft eine Vorrichtung mit einer Sprachprozessoreinrichtung zum Verarbeiten digitaler Sprachsignale, einer ersten Speichereinrichtung, durch welche der Sprachprozessoreinrichtung die für die Verarbeitung der digitalen Sprachsignale erforderliche Information zur Verfügung stellbar ist, und einer zweiten Speichereinrichtung, in der das Ergebnis der Verarbeitung der digitalen Sprachsignale abspeicherbar ist. Außerdem betrifft die Erfindung eine Vorrichtung, in der in einem weiteren Modus die Sprachprozessoreinrichtung so ausgebildet ist, dass, falls für ein eingegebenes digitales Sprachsignal ein entsprechendes digitales Sprachsignal in der ersten Speichereinrichtung gefunden wird, mindestens ein Steuersignal zur Ansteuerung wenigstens einer Geräteeinrichtung ausgegeben wird.

## Beschreibung

### Gebiet der Erfindung

Im allgemeinen betrifft die Erfindung eine Vorrichtung mit einer Sprachprozessoreinrichtung zum Verarbeiten digitaler Sprachsignale. Die erfindungsgemäße Vorrichtung fällt insbesondere in das Gebiet des Lernens bzw. Trainierens von Spracherkennungssystemen, d.h. der Erweiterung der zur Spracherkennung verwendeten Information. Darüber hinaus kann die erfindungsgemäße Vorrichtung auch zur Ansteuerung von Geräteeinrichtungen durch Sprachsignale eingesetzt werden.

### Stand der Technik

Vorrichtungen der oben bezeichneten Art sind aus dem Stand der Technik bekannt. Beispielsweise kann ein herkömmlicher Computer, beispielsweise ein PC, mit einer Software zur Verarbeitung von Sprachsignalen ausgestattet werden. Ein derartiger Computer umfasst eine Speichereinrichtung bzw. einen Speicherbereich, in dem die zur Sprachverarbeitung erforderliche Information abgespeichert ist.

Weiterhin ist der Computer mit einer Spracheingabeeinrichtung, beispielsweise in Form eines Mikrophons ausgestattet, durch das Sprachsignale, die anschließend durch einen A/D-Konverter in digitale Sprachsignale umgewandelt werden, dem Prozessor des Computers zur Verfügung gestellt werden.

In dem Prozessor läuft schließlich ein herkömmliches Programm ab, durch das eine Verarbeitung der Sprachsignale, beispielsweise eine Spracherkennung, durchgeführt wird. Hierbei werden beispielsweise die digitalen Sprachsignale mit den in der Speichereinrichtung abgespeicherten Sprachsignalen verglichen, und falls in der Speichereinrichtung kein entsprechendes Sprachsignal gefunden wird, wird diese Information über das Display des Computers ausgegeben. Der Benutzer hat dann die Möglichkeit, das Sprachsignal zu identifizieren, also beispielsweise durch die Tastatur den entsprechenden ASCII-Code für das Sprachsignal einzugeben. Dieser wird dann zusammen mit dem Sprachsignal in der Speichereinrichtung abgelegt, so dass dieses Sprachsignal in Zukunft zugeordnet bzw. erkannt werden kann.

Nachteil dieses bekannten Systems ist es allerdings, dass eine Verarbeitung der Sprachsignale, also beispielsweise ein Lernen bzw. Trainieren des Spracherkennungssystems, nur stationär möglich ist, d.h. der Benutzer muss sich in unmittelbarer Nähe des Computers aufhalten und muss sich dort ausschließlich mit dem Trainieren des Spracherkennungssystems beschäftigen.

Demgemäß liegt der Erfindung das Problem zugrunde, eine Vorrichtung zur Verfügung zu stellen, mit der eine portable Verarbeitung von Sprachsignalen möglich ist.

### Beschreibung der Erfindung

Das oben bezeichnete Problem wird gelöst durch eine Vorrichtung mit einer Sprachprozessoreinrichtung zum Verarbeiten digitaler Sprachsignale, mit einer ersten Speichereinrichtung, durch welche der Sprachprozessoreinrichtung die für die Verarbeitung der digitalen Sprachsignale erforderliche Information zur Verfügung stellbar ist, und mit einer zweiten Speichereinrichtung, in der das Ergebnis der Verarbeitung der digitalen Sprachsignale abspeicherbar ist.

Dadurch dass die erfindungsgemäße Vorrichtung gegenüber dem Stand der Technik eine zweite Speichereinrichtung umfasst, ist es möglich, das Ergebnis der Verarbeitung der digitalen Sprachsignale zu speichern und zu einem späteren Zeitpunkt zur Verarbeitung, beispielsweise mit einem stationär vorgesehenen Computer oder auf andere geeignete Weise, wieder abzurufen.

Durch diese Portabilität wird sowohl eine räumliche als auch eine zeitlich Flexibilität geschaffen, die Einsatzmöglichkeit der Vorrichtung gegenüber dem Stand der Technik stark erhöht.

Insbesondere kann die Vorrichtung jederzeit vom Benutzer mitgeführt werden. Dies ermöglicht ein fortwährendes Aufzeichnen der Ergebnisse der Verarbeitung von Sprachsignalen. Durch das Mitführen kann die Zeit, während der Sprachsignale verarbeitet werden können, gegenüber einer stationären Einrichtung erheblich erhöht werden. Darüber hinaus kann die Aufzeichnung der Ergebnisse und die Weiterverarbeitung auch zeitlich voneinander getrennt werden, wie dies beispielsweise im Fall eines auf einem Computer laufenden Spracherkennungssystems, bei dem eine Speicherung der Ergebnisse der Sprachverarbeitung zur weiteren Verarbeitung durch einen Benutzer nicht vorgesehen ist, nicht möglich ist.

Entsprechend einer bevorzugten Weiterbildung der Vorrichtung kann die Information in der ersten Speichereinrichtung digitale Sprachsignale umfassen, und die Sprachprozessoreinrichtung so ausgebildet sein, dass sie ein eingegebenes digitales Sprachsignal mit den digitalen Sprachsignalen in der ersten Speichereinrichtung vergleicht und das Ergebnis des Vergleichs in der zweiten Speichereinrichtung abspeichert. Durch diese vorteilhafte Weiterbildung ist es möglich, ein Spracherkennungssystem, das jederzeit mitgeführt und damit eingesetzt werden kann, zu implementieren.

Vorteilhafterweise kann hierbei das eingegebene Sprachsignal in der zweiten Speichereinrichtung abgespeichert werden, wenn durch den Vergleich für das eingegebene digitale Sprachsignal kein entsprechendes digitales Sprachsignal in der ersten Speichereinrichtung ermittelt wird. Auf diese Weise können alle nicht erkannten Wörter zur späteren Erkennung durch den Benutzer gespeichert werden.

Insbesondere können mit der Vorrichtung auf diese Weise nicht erkannte Sprachsignale bzw. die Wörter, die diesen Sprachsignalen entsprechen, fortwährend aufgezeichnet werden und dem Spracherkennungssystem im Rahmen einer weiteren Verarbeitung durch den Benutzer beigebracht werden. Durch die Portabilität der Vorrichtung können die Anzahl und die Dauer der Trainingsphasen für das Spracherkennungssystem gegenüber einem stationär vorgesehenen System erheblich erhöht werden, was insgesamt dazu führt, dass das Spracherkennungssystem in Bezug auf das Alter der Vorrichtung wesentlich schneller als bekannte Spracherkennungssysteme lernt, oder anders ausgedrückt, dass die Erkennungsrate des erfindungsgemäßen Spracherkennungssystems bei gleichem Alter der Vorrichtung stark verbessert wird.

Entsprechend einer anderen vorteilhaften Weiterbildung kann das eingegebene Sprachsignal in der zweiten Speichereinrichtung abgespeichert werden, wenn durch den Vergleich für das eingegebene digitale Sprachsignal ein entsprechendes digitales Sprachsignal in der ersten Speichereinrichtung auf geringem Konfidenzniveau ermittelt wird. Durch diese Maßnahme können nicht nur Sprachsignale bzw. Wörter, die überhaupt nicht erkannt werden, abgespeichert werden, sondern auch schlecht erkannte Sprachsignale bzw. Wörter.

Diese schlecht erkannten Sprachsignale bzw. Wörter lassen sich durch eine spätere Verarbeitung eindeutig identifizieren. Hierdurch kann die Toleranz und damit die Erkennungsrate des Spracherkennungssystems bezüglich einer undeutlichen Aussprache stark erhöht werden. Darüber hinaus sinkt auch die Anfälligkeit des Spracherkennungssystem gegenüber Hintergrundgeräuschen.

Gemäß einer höchst vorteilhaften Weiterbildung kann die Sprachprozessoreinrichtung so ausgebildet sein, dass zum Vergleichen eines eingegebenen Sprachsignals mit einem digitalen Sprachsignal in der ersten Speichereinrichtung ein Ähnlichkeitsmaß für die beiden Signale ermittelt wird, und das digitale Sprachsignal in der ersten Speichereinrichtung als ein dem eingegebenen digitalen Sprachsignal entsprechendes Signal identifiziert wird, wenn dieses Ähnlichkeitsmaß grösser als ein vorgegebener Wert ist. Durch Verwendung eines Ähnlichkeitsmasses kann der Vergleich zwischen zwei Sprachsignalen auf einfache Weise implementiert werden.

Darüber hinaus können in dieser Weiterbildung durch Änderung des vorgegebenen Werts verschiedene Konfidenzniveaus für die Spracherkennung vorbestimmt werden.

Entsprechend einer anderen Weiterbildung kann die Sprachprozessoreinrichtung weiterhin so ausgebildet sein, dass zum Vergleichen eines eingegebenen Sprachsignals mit einem digitalen Sprachsignal in der ersten Speichereinrichtung ein Ähnlichkeitsmaß für die beiden Signale ermittelt wird, und das digitale Sprachsignal in der ersten Speichereinrichtung als ein dem eingegebenen digitalen Sprachsignal ähnliches Signal identifiziert wird, wenn dieses Ähnlichkeitsmaß grösser als ein vorgegebener erster Wert und kleiner als ein vorgegebener zweiter Wert ist. Durch diese Maßnahme lässt sich auf einfache Weise ein Bereich festlegen, der schlecht erkannte Sprachsignale bzw. Wörter definiert. Diese schlecht erkannten Sprachsignale können dann durch eine spätere Verarbeitung eindeutig identifiziert werden, was zu den bereits oben genannten Vorteilen führt. Auch in dieser Weiterbildung können durch Vorgabe des ersten und des zweiten Werts verschiedene Konfidenzniveaus zum Festlegen des Bereichs, der schlecht erkannte Sprachsignale definiert, realisiert werden.

Entsprechend einer anderen Weiterbildung kann die Sprachprozessoreinrichtung so ausgebildet sein, dass zum Vergleich ein analysiertes eingegebenes digitales Sprachsignal verwendbar ist. Hierdurch lassen sich die digitalen Sprachsignale bereits vor dem Vergleich für denselben optimieren.

Gemäß einer vorteilhaften Weiterbildung aller zuvor beschriebenen Vorrichtungen kann die Information in der ersten Speichereinrichtung benutzerunabhängige Information, beispielsweise in Form eines Wortschatzes in einer oder in verschiedenen Sprachen, umfassen. Diese Ausgestaltung ermöglicht es, den Aufwand zur Implementierung der Spracherkennung erheblich zu reduzieren, da die benutzerunabhängige Information lediglich einmal erstellt werden muss und dann beliebig oft einsetzbar ist. Ein Trainieren des Spracherkennungssystems bezüglich eines Grundwortschatzes, wie es beispielsweise bei Spracherkennungsprogrammen durch das Vorlesen einer Vielzahl von Texten erforderlich ist, entfällt somit.

Weiterhin kann die Information vorteilhafterweise auch benutzerabhängige Information, also insbesondere Information über die Eigenheiten der Sprechweise des Benutzers, umfassen. Durch diese Information kann die benutzerunabhängige Information so ergänzt werden, dass sich insgesamt eine höhere Erkennungsrate ergibt.

Vorteilhafterweise kann hierbei die erste Speichereinrichtung einen ersten für benutzerunabhängige Information vorgesehenen Speicherabschnitt und einen zweiten für benutzerabhängige Information vorgesehenen Speicherabschnitt umfassen, wobei der erste Speicherabschnitt und der zweite Speicherabschnitt getrennt voneinander in die Vorrichtung einsetzbar und aus ihr entnehmbar vorgesehen sind. Durch diese Weiterbildung kann die Basis des Spracherkennungssystems, nämlich der Referenzwortschatz, und gegebenenfalls die benutzerabhängige Information in einer Vielzahl von Spracherkennungseinrichtungen, unabhängig ob diese Einrichtungen einen Lernmodus aufweisen oder nur zur Sprachsteuerung dienen eingesetzt werden.

Weiterhin kann in dieser Weiterbildung durch Austausch der benutzerabhängigen Information die Vorrichtung sehr schnell auf einen anderen Benutzer eingestellt werden.

Alternativ kann auch die gesamte erste Speichereinrichtung in die Vorrichtung einsetzbar und aus ihr entnehmbar vorgesehen sein. In diesem Fall ergeben sich analog die oben genannten Vorteile, wobei in dem Fall, in dem die erste Speichereinrichtung einen ersten und zweiten Abschnitt für benutzerunabhängige und benutzerabhängige Information aufweist, ein benutzerabhängiges Speichermodul, das in seiner Gesamtheit austauschbar ist, vorliegt.

Entsprechend einer anderen Weiterbildung aller zuvor beschriebenen Ausführungen kann die erste Speichereinrichtung und die zweite Speichereinrichtung als eine Speichereinrichtung mit zwei entsprechenden Speicherabschnitten ausgebildet sein. Dies ermöglicht eine einfache Ausbildung der Vorrichtung mit nur einer Speichereinheit.

Zweckmäßigerweise kann die Sprachprozessoreinrichtung durch einen DSP und/oder einen µ-Controller und/oder einen µ-Prozessor ausgebildet sein.

Die zuvor beschriebenen Vorrichtungen können vorteilhafterweise so weitergebildet sein, dass wenigstens eine Schnittstelle zur Ausgabe des Ergebnisses der Verarbeitung der digitalen Sprachsignale zur weiteren Verarbeitung durch einen Benutzer vorgesehen ist. Hierdurch können die Ergebnisse der Sprachverarbeitung auf einfache Weise an verschiedenste Einrichtungen zur weiteren Verarbeitung der Ergebnisse ausgegeben werden. Als Benutzer sind in diesem Zusammenhang eine Person und/oder ein Computerprogramm zu verstehen.

Zweckmäßigerweise ist die wenigstens eine Schnittstelle durch eine serielle Schnittstelle ausgebildet. Auf diese Weise kann die wenigstens eine Schnittstelle relativ einfach und damit sowohl fehlerunanfällig als auch kostengünstig implementiert werden.

Derartige Schnittstellen können beispielsweise durch eine USB-, eine Infrarot-, vorzugsweise eine IrDA-, eine Funk-, vorzugsweise eine Bluetooth-, eine Tastatur- und/oder eine RS232-Schnittstelle realisiert werden.

Falls die Vorrichtung mehr als eine Schnittstelle aufweist, kann vorteilhafterweise eine Schnittstellenauswahleinrichtung vorgesehen sein. Durch die Möglichkeit, die Ergebnisse in verschiedenen Schnittstellenstandards auszugeben, wird die Vorrichtung universell einsetzbar und kann daher mit einer Vielzahl von Geräteeinrichtungen kommunizieren.

Gemäß einer besonders vorteilhaften Weiterbildung der zuvor beschriebenen Vorrichtungen kann die erste Speichereinrichtung so vorgesehen sein, dass die für die Verarbeitung der digitalen Sprachsignale erforderliche Information veränderbar ist. Durch diese Maßnahme kann auf einfache Weise die Information in der ersten Speichereinrichtung aktualisiert und damit das Spracherkennungssystem trainiert werden.

Die Vorrichtung kann vorteilhafterweise eine Eingabeeinrichtung zur Eingabe von digitalen Sprachsignalen in die Sprachprozessoreinrichtung, beispielsweise in Form eines Mikrophons, umfassen. Zur Umwandlung in digitale Sprachsignale kann gegebenenfalls eine A/D-Konvertereinrichtung vorgesehen sein. Diese Einrichtungen können mit der Vorrichtung in einem Gehäuse untergebracht sein.

Alternativ hierzu kann die Eingabeeinrichtung über eine Funkstrecke mit der Sprachprozessoreinrichtung verbunden sein. In dieser Weiterbildung können die Vorrichtung und die Eingabeeinrichtung räumlich voneinander getrennt getragen werden. Beispielsweise können die Eingabeeinrichtung am Kopf und die verbleibenden Komponenten der Vorrichtung am Gürtel getragen werden.

Entsprechend einer Weiterbildung aller zuvor beschriebenen Vorrichtungen kann wenigstens eine Ausgabeeinrichtung zur Ausgabe von digitalen Sprachsignalen und/oder Informationssignalen aus der Sprachprozessoreinrichtung vorgesehen sein. Durch diese Maßnahme ist eine Kommunikation der Vorrichtung mit dem Benutzer möglich. Beispielsweise können gespeicherte Sprachsignale bei einer weiteren Verarbeitung durch den Benutzer wiederholt werden und/oder Informationen über den Status der Vorrichtung gegeben werden. Weiterhin können von dem Benutzer geforderte Aktionen, Eingaben, Bestätigungen und dergleichen angefordert werden.

Gegebenenfalls kann die wenigstens eine Ausgabeeinrichtung eine D/A-Konvertereinrichtung umfassen.

Vorteilhafterweise kann die wenigstens eine Ausgabeeinrichtung über eine Funkstrecke mit der Sprachprozessoreinrichtung verbunden sein. Hierdurch kann die Vorrichtung im Rahmen der Funkübertragungsstrecke räumlich unabhängig von der Ausgabeeinrichtung eingesetzt werden.

Zur Darstellung von Sprachsignalen kann die wenigstens eine Ausgabeeinrichtung eine Lautsprechereinrichtung umfassen. Diese kann beispielsweise in Form eines Ohrhörers zusammen mit einer Mikrophoneinrichtung in einem sogenannten Head-Set vorgesehen sein. Zweckmäßigerweise kann hierbei das Head-Set über eine Funkstrecke mit den verbleibenden Komponenten der Vorrichtung verbunden sein. Alternativ ist auch eine Übertragung durch ein Kabel, wie aus herkömmlichen Freisprecheinrichtungen bekannt, möglich.

Vorteilhafterweise kann die wenigstens eine Ausgabeeinrichtung auch eine Displayeinrichtung zur Ausgabe von Informationssignalen aus der Sprachprozessoreinrichtung umfassen. Dies ermöglicht alternativ oder zusätzlich eine visuelle Anzeige von zur Kommunikation zwischen Vorrichtung und Benutzer erforderlicher Information.

Entsprechend einer besonders bevorzugten Weiterbildung ist die Sprachprozessoreinrichtung so ausgebildet, dass, falls für ein eingegebenes digitales Sprachsignal ein entsprechendes digitales Sprachsignal in der ersten Speichereinrichtung ermittelt wird, mindestens ein Steuersignal zur Ansteuerung wenigstens einer Geräteeinrichtung ausgegeben wird.

In dieser Weiterbildung umfasst die Vorrichtung neben dem Lernmodus, in dem das Spracherkennungssystem trainiert werden kann auch einen Modus, in dem sie als eine durch Sprachsignale betätigbare Steuereinrichtung für eine beliebige Anzahl von Geräteeinrichtungen einsetzbar ist. Als Geräteeinrichtungen sind alle elektronisch steuerbaren Geräteeinrichtungen, beispielsweise Computereinrichtungen, Haushaltsgeräte, sicherheitstechnische Einrichtungen und viele andere, denkbar.

Die Vorrichtung kann so als ein auf den jeweiligen Benutzer trainierbarer Personal Voice Assistant (PVA), durch die eine Vielzahl von Geräteeinrichtungen bedient werden können, eingesetzt werden. Die Möglichkeit des Benutzers, die Vorrichtung immer bei sich zu führen, ermöglicht hierbei ein sehr effektives Training der Vorrichtung.

Wenn Steuersignale für wenigstens zwei Geräteeinrichtungen ausgebbar sind, kann eine Geräteauswahleinrichtung vorgesehen sein. Diese kann ebenfalls durch Sprachsignale ansteuerbar sein.

Vorteilhafterweise können, wenn die Vorrichtung in dem Steuermodus betätigbar ist, in der ersten Speichereinrichtung digitale Sprachsignale zur Steuerung der wenigstens einen Geräteeinrichtung gespeichert sein, und eine Treiberelektronikeinrichtung vorgesehen sein, die, falls in der ersten Speichereinrichtung ein entsprechendes digitales Sprachsignal ermittelt wird, entsprechende Steuersignale für die wenigstens eine Geräteeinrichtung ausgibt.

Entsprechend einer vorteilhaften Weiterbildung können die zuvor beschriebenen Vorrichtungen zur Steuerung auch Signale aussenden, die eine Adaptereinrichtung für eine Geräteeinrichtung mit einer Treiberelektronik, ansteuern. Vorteil dieser Weiterbildung ist es, dass für jede beliebige Geräteeinrichtung ein Adapter geliefert werden kann und somit auch ein Nachrüsten bereits vorhandener Geräteeinrichtungen, die in der Regel über Tastenbedienungen ansteuerbar sind, möglich ist.

Gemäß einer vorteilhaften Weiterbildung kann eine derartige Adaptereinrichtung in Form eines in die Geräteeinrichtung einsetzbaren Moduls vorgesehen sein.

Entsprechend einer anderen Weiterbildung der zuvor beschriebenen Adaptereinrichtung, kann diese derart ausgebildet sein, dass sie Informationssignale von der Geräteeinrichtung aufnehmen kann. Derartige Informationssignale können insbesondere die durch die Geräteeinrichtung ausführbaren Funktionen oder den Betriebszustand der Geräteeinrichtung betreffen.

Zur Erläuterung der Erfindung werden im folgenden Ausführungsbeispiele unter Bezugnahme auf die beigefügte Zeichnung beschrieben. In der Zeichnung zeigen:
- Figur 1: eine erste Ausführungsform einer Vorrichtung mit einer Sprachprozessoreinrichtung zum Verarbeiten digitaler Sprachsignale,
- Figur 2 a: eine zweite Ausführungsform einer Vorrichtung mit einer Sprachprozessoreinrichtung zum Verarbeiten digitaler Sprachsignale, insbesondere zum Trainieren eines Spracherkennungssystems,
- Figur 2b: eine Ausführungsform einer Vorrichtung zum Ankoppeln der Vorrichtung nach Figur 2a an einen Computer zur weiteren Verarbeitung der Ergebnisse der Vorrichtung nach Figur 2a zum Trainieren eines Spracherkennungssystems,
- Figur 3: eine dritte Ausführungsform einer Vorrichtung mit einer Sprachprozessoreinrichtung zum Verarbeiten digitaler Sprachsignale, insbesondere zum Trainieren eines Spracherkennungssystems und zum Ansteuern von Geräteeinrichtungen, und
- Figur 4: eine Ausführungsform einer Adaptereinrichtung, die durch die Vorrichtung nach Figur 3 ansteuerbar ist.

In den Figuren sind einander entsprechende Komponenten der verschiedenen Ausführungsformen jeweils mit Bezugsziffern gekennzeichnet, die sich lediglich in ihrer ersten Ziffer unterscheiden. Zur Vermeidung von Wiederholungen werden Komponenten, die in mehreren Ausführungsformen auftreten nur einmal beschrieben und im übrigen wird auf die erste Beschreibung dieser Komponenten verwiesen.

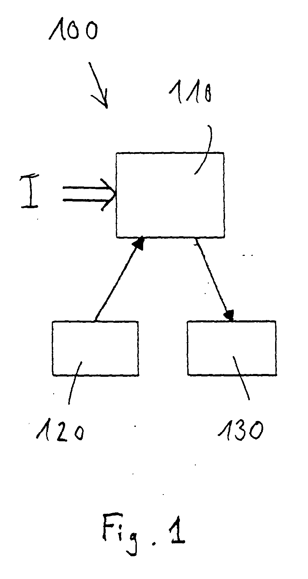

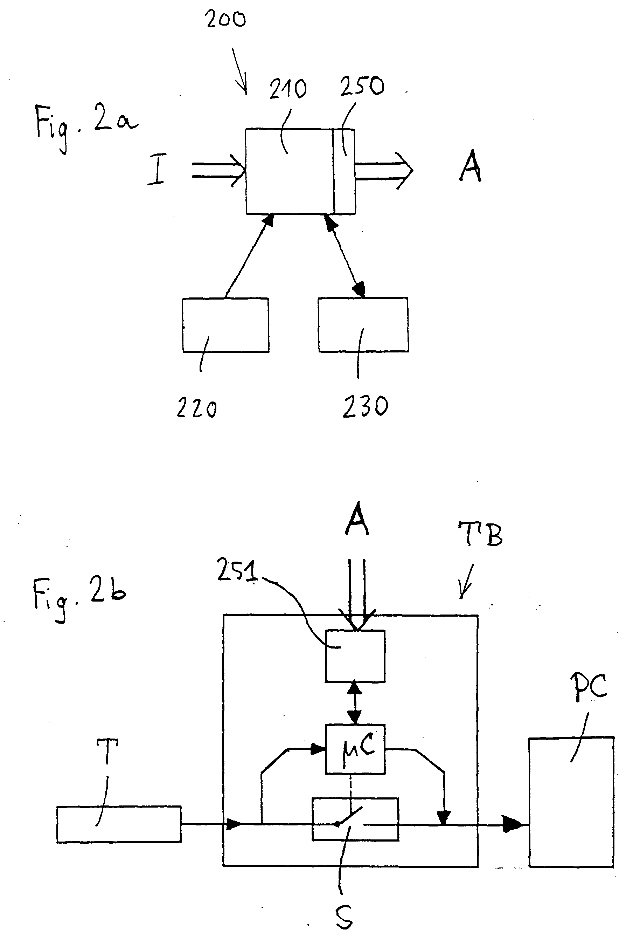

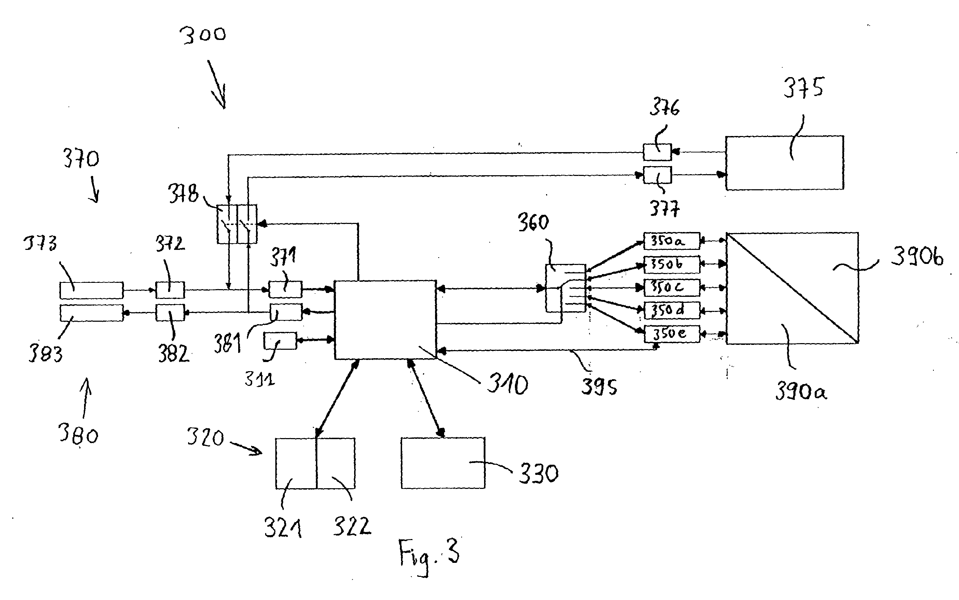

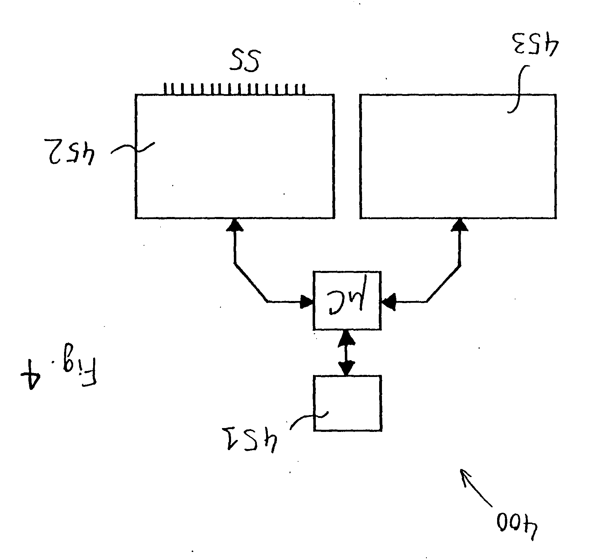

In Figur 1 ist eine erste Ausführungsform 100 einer Vorrichtung mit einer Sprachprozessoreinrichtung 110 zum Verarbeiten digitaler Sprachsignale I dargestellt.

Diese Vorrichtung umfasst eine erste Speichereinrichtung 120 und eine zweite Speichereinrichtung 130. Die Sprachprozessoreinrichtung, die beispielsweise durch einen DSP und/oder einen µ-Controller und/oder einen µ-Prozessor ausgebildet sein kann, ist derart ausgelegt, dass sie ein eingegebenes digitales Sprachsignal I unter Zuhilfenahme von Information aus der ersten Speichereinrichtung 120 (angedeutet durch den Pfeil zwischen der ersten Speichereinrichtung 120 und der Sprachprozessoreinrichtung 110) verarbeitet.

Das Ergebnis dieser Verarbeitung wird in der zweiten Speichereinrichtung 130 abgelegt (angedeutet durch den Pfeil zwischen der Sprachprozessoreinrichtung 110 und der zweiten Speichereinrichtung 130). Von dort kann das Ergebnis der Sprachverarbeitung jederzeit zur weiteren Bearbeitung durch einen Benutzer abgerufen werden.

Neben der dargestellten Ausführung sind eine Vielzahl von Abwandlungen möglich.

So können die erste Speichereinrichtung 120 und die zweite Speichereinrichtung 130 je nach Anforderung in die Vorrichtung einsetzbar und aus ihr entfernbar ausgebildet sein. Darüber hinaus können die erste Speichereinrichtung 120 und die zweite Speichereinrichtung 130 physikalisch als eine einzige Speichereinrichtung mit zwei entsprechenden Speicherabschnitten vorliegen.

Außerdem kann die erste Speichereinrichtung eine Mehrzahl verschiedener Speicherabschnitte aufweisen, in denen jeweils eine bestimmte Art von Information abgespeichert ist.

In Figur 2a ist eine zweite Ausführungsform 200 einer Vorrichtung mit einer Sprachprozessoreinrichtung 210 zum Verarbeiten digitaler Sprachsignale I dargestellt.

In dieser Ausführungsform wird eine Sprachverarbeitung in Form einer Spracherkennung durchgeführt, wobei in der zweiten Speichereinrichtung 230 jeweils nicht erkannte Sprachsignale zur späteren Verarbeitung abgespeichert werden können. Wie in Figur 1 und in den noch folgenden Figuren kennzeichnen die Pfeile in Figur 2a die möglichen Signalwege. Ein Sprachsignal wird von der Sprachprozessoreinrichtung als nicht erkannt gewertet, wenn in der ersten Speichereinrichtung 220 kein entsprechendes Sprachsignal gefunden wird. In der ersten Speichereinrichtung 220 sind hierbei benutzerunabhängige Sprachsignale abgelegt. Diese Sprachsignale können beispielsweise einen Standardwortschatz in verschiedenen Sprachen umfassen.

Insbesondere wird in der dargestellten Ausführungsform ein Vergleich zwischen dem eingegebenen Sprachsignal und den in der ersten Speichereinrichtung abgespeicherten Signalen durchgeführt und auf Basis dieses Vergleichs ermittelt, ob sich in der ersten Speichereinrichtung ein dem eingegebenen Signal entsprechendes Signal befindet.

Neben anderen aus dem Stand der Technik bekannten Verfahren kann hierzu ein Ähnlichkeitsmaß für die zu vergleichenden Signale ermittelt werden, und der Vergleich als positiv angesehen werden (d.h. das eingegebene Sprachsignal konnte einem Sprachsignal in der ersten Speichereinrichtung zugeordnet werden), wenn dieses Ähnlichkeitsmaß einen vorgegebenen Wert überschreitet.

Zusätzlich hierzu wird gemäß der Ausführungsform in Figur 2a auch ein Bereich für schlecht erkannte Signale definiert. Diese schlecht erkannten Signale werden ebenfalls in der zweiten Speichereinrichtung 230 zur späteren Verarbeitung abgespeichert.

Hierzu wird ein Bereich, der durch einen ersten und einen zweiten vorgegebenen Wert für das Ähnlichkeitsmaß vorgegeben ist, definiert, und ein eingegebenes Sprachsignal wird als schlecht erkanntes Sprachsignal klassifiziert, wenn in der ersten Speichereinrichtung ein oder mehrere Signale gefunden werden, die mit dem eingegebenen Sprachsignal ein Ähnlichkeitsmaß ergeben, das in dem durch die vorgegebenen Werte definierten Bereich liegt.

Die Vorrichtung nach Figur 2a umfasst weiterhin eine Schnittstelle 250, über die durch die Sprachprozessoreinrichtung 210 die in der zweiten Speichereinrichtung 230 abgespeicherten Ergebnisse der Spracherkennung (vorliegend also nicht erkannte oder schlecht erkannte Sprachsignale A) ausgegeben werden können.

Neben der beschriebenen Ausführungsform sind eine Vielzahl von Abwandlungen möglich.

So kann beispielsweise von der Möglichkeit schlecht erkannte Signale zur weiteren Verarbeitung zu speichern abgesehen werden.

Darüber hinaus kann die Sprachprozessoreinrichtung auch so ausgebildet sein, dass sie bereits analysierte Signale verarbeitet.

Außerdem sind auch die bereits im Zusammenhang mit Figur 1 diskutierten Abwandlungen einsetzbar.

In Figur 2b ist eine Einrichtung TB dargestellt, mit der ein in der zweiten Speichereinrichtung 230 abgespeichertes Signal einem Computer zur weiteren Verarbeitung zur Verfügung gestellt werden kann.

Die Einrichtung TB umfasst eine Schnittstelle 251, durch die von der Schnittstelle 250 der Vorrichtung aus Figur 2a abgegebene Signale von dem Computer PC aufgenommen werden können. Weiterhin umfasst die Einrichtung TB einen µ-Controller µC zur Steuerung der Einrichtung TB.

In Figur 2b ist außerdem eine Eingabeeinrichtung in Form einer Tastatur T, sowie ein Computer PC dargestellt. Die Einrichtung TB ist hierbei zwischen Tastatur T und Computer PC vorgesehen.

Ein Schalter S ermöglicht in einer ersten Stellung eine direkte Verbindung zwischen Tastatur T und Computer PC über die Einrichtung TB. In einer zweiten Schalterstellung kann das aus der zweiten Speichereinrichtung ausgelesene Signal über die Einrichtung TB in den Computer PC eingegeben werden. Durch entsprechende Eingabe einer Tastenfolge auf der Tastatur kann dem Sprachsignal ein Identifikationssignal, beispielsweise die entsprechende Schriftform des Sprachsignals, zugewiesen werden. Dieses kann schließlich über die Einrichtung TB an die Vorrichtung aus Figur 2a übermittelt werden und dort zusammen mit dem Sprachsignal in der ersten Speichereinrichtung 220 abgelegt werden, so dass es für weitere Vergleiche zur Verfügung steht.

Alternativ kann auch eine weitere Schnittstelle zwischen dem Computer PC und der ersten Speichereinrichtung 220 (bzw. der Sprachprozessoreinrichtung 210) vorgesehen, über die das Sprachsignal mit entsprechendem Schriftsignal in der ersten Speichereinrichtung 220 abgelegt werden kann.

In Figur 3 ist eine dritte Ausführungsform einer Vorrichtung mit einer Sprachprozessoreinrichtung zum Verarbeiten digitaler Sprachsignale 300 dargestellt.

Zusätzlich zu dem bereits im Zusammenhang mit den Figuren 2a und 2b beschriebenen Modus zum Trainieren eines Spracherkennungssystems kann die Vorrichtung 300 in einem Modus betrieben werden, in dem sich Geräteeinrichtungen durch Sprachsignale steuern lassen. Auf diese Weise lässt sich die Vorrichtung 300 als Personal Voice Assistant (PVA), der an den jeweiligen Benutzer und seine Anforderungen angepasst ist, einsetzen.

Wie die in Figur 2a beschriebene Vorrichtung umfasst auch die Vorrichtung 300 eine Sprachprozessoreinrichtung 310, eine erste Speichereinrichtung 320 und eine zweite Speichereinrichtung 330.

Zur Sprachprozessoreinrichtung 310 bleibt anzumerken, dass diese zwar eine Vielzahl zusätzlicher Steuerfunktionen ausführt, die Bezeichnung Sprachprozessoreinrichtung dennoch aus Gründen der Konsistenz mit den übrigen Ausführungsformen beibehalten wird. Hierbei kann die Sprachprozessoreinrichtung beispielsweise durch einen DSP und/oder einen µ-Controller und/oder einen µ-Prozessor ausgebildet sein.

Zur ersten Speichereinrichtung 320 bleibt anzumerken, dass diese zwei Speicherabschnitte aufweist, einen ersten Abschnitt 321 zur Speicherung von benutzerunabhängiger Information und einen zweiten Abschnitt 322 zur Speicherung von benutzerabhängiger Information.

Im übrigen werden diese beiden Komponenten zur Vermeidung von Wiederholungen im folgenden nicht beschrieben; vielmehr wird auf die entsprechenden Beschreibung dieser Komponenten im Zusammenhang mit den Figuren 1 bis 2b sowie der Alternativen zu diesen Ausführungsformen verwiesen.

Während in der in Figur 2a gezeigten Ausführungsform lediglich eine Schnittstelle vorgesehen ist, umfasst die Vorrichtung 300 eine Mehrzahl von Schnittstellen 350a bis 350e. In der gezeigten Ausführungsform sind eine USB-, eine Infrarot- in Form einer IrDA-, eine Funk- in Form einer Bluetooth-, eine Tastatur- und eine RS232-Schnittstelle vorgesehen. Selbstverständlich lassen sich, je nach Anforderung, eine beliebige Anzahl dieser Schnittstellen, sowie anderer Schnittstellen miteinander kombinieren.

Die Schnittstellen 350a bis 350e werden durch eine Schnittstellenauswahleinrichtung 360, die durch die Sprachprozessoreinrichtung steuerbar ist, ausgewählt. Die Schnittstellenauswahleinrichtung kann hierbei ihrerseits durch ein Sprachsignal gesteuert werden. Alternativ kann die Vorrichtung 300 auch eine Tastatur umfassen, durch welche die Schnittstellenauswahleinrichtung ansprechbar ist.

Die Schnittstelleneinrichtungen 350a bis 350e sind mit Geräteeinrichtungen 390a und/oder 390b verbunden. Die Geräteeinrichtung 390a stellt hierbei stellvertretend einen Computer dar, mit dem in der zweiten Speichereinrichtung abgespeicherte Ergebnisse der Spracherkennung in einem ersten Modus der Vorrichtung 300 durch einen Benutzer weiter verarbeitet werden können. Die Geräteeinrichtung 390b stellt stellvertretend eine beliebige Geräteeinrichtung, wie beispielsweise ein Haushaltsgerät, das elektronisch ansteuerbar ist, dar. Selbstverständlich lassen sich mit der Vorrichtung 300 auch eine Vielzahl von Geräteeinrichtungen ansteuern. Hierzu werden von der Sprachprozessoreinrichtung entsprechende Auswahlsignale 395 ausgegeben.

Die Übertragung zwischen den Schnittstelleneinrichtungen 350a bis 350e zu den entsprechenden Geräteeinrichtungen wird auf bekannte Weise, beispielsweise in Form von ASCII- oder anderen bekannten Steuercodes, realisiert.

Weiterhin umfasst die Vorrichtung 300 eine Eingabeeinrichtung 370, mit der Sprachsignale in die Sprachprozessoreinrichtung 310 eingegeben werden können. Die Eingabeeinrichtung 370 weist eine Mikrophoneinrichtung 373, eine Funkstrecke 372 und einen A/D-Konverter 371 auf.

Außerdem ist in der in Figur 3 gezeigten Vorrichtung eine Sprachausgabeeinrichtung 380 vorgesehen, mit der Sprachsignale und/oder Informationssignale aus der Sprachprozessoreinrichtung ausgegeben werden können. Die Sprachausgabeeinrichtung 380 weist hierzu einen D/A-Konverter 381, eine Funkstrecke 382 und eine Lautsprechereinrichtung 383 auf. Durch diese Sprachausgabeeinrichtung wird einerseits die Möglichkeit geschaffen, aufgenommene und nicht oder schlecht erkannte Sprachsignale zu wiederholen. Andererseits können über diese Ausgabeeinrichtung dem Benutzer auch Informationen über dem Zustand der Vorrichtung, erwartete Befehle und dergleichen mitgeteilt werden.

Die Spracheingabeeinrichtung 370 und die Sprachausgabeeinrichtung 380 ermöglichen somit eine Kommunikation des Benutzers mit der Vorrichtung 300.

Zusätzlich zu der Kommunikationsmöglichkeit mit dem Benutzer kann die Vorrichtung auch mit einem anderen elektronischen Gerät 375, beispielsweise einem anderen PVA, einem Mobiltelephon, einem Kommunikationsnetz und dergleichen kommunizieren.

Hierzu ist eine Schaltereinrichtung 378, die durch die Sprachprozessoreinrichtung 310 steuerbar ist, vorgesehen. Im dargestellten Beispiel ist zur Übertragung der Information zur Vorrichtung 300 eine Funkstrecke 376 und zur Übertragung der Information von der Vorrichtung 300 zu dem anderen elektronischen Gerät 375 eine Funkstrecke 377 vorgesehen.

Die in Figur 3 dargestellte Vorrichtung kann in einem ersten Modus betrieben werden, in dem die in der zweiten Speichereinrichtung 330 aufgezeichneten Sprachsignale weiter verarbeitet werden.

Hierzu werden, mittels Steuerung durch die Sprachprozessoreinrichtung 310, die in der zweiten Speichereinrichtung 330 abgelegten Sprachsignale über eine der Schnittstellen 350a bis 350e an einen Computer 390a ausgegeben. In diesem Computer werden, analog zu der im Zusammenhang mit Figur 2 beschriebenen Ausführungsform, durch einen Benutzer den nicht oder schlecht erkannten Sprachsignalen entsprechende Identifikationssignale zugeordnet. Die nicht oder schlecht erkannten Sprachsignale lassen sich hierbei durch eine in dem Computer vorgesehene Sprachausgabeeinrichtung oder die Ausgabeeinrichtung 380 wiederholen. Nach der Identifikation werden das Sprachsignal und das Identifikationssignal ihrerseits über die entsprechende Schnittstelle an die Sprachprozessoreinrichtung zurückgegeben und in der ersten Speichereinrichtung 320 abgelegt, so dass sie für zukünftige Spracherkennung zur Verfügung stehen.

In dem zweiten Modus wird die Vorrichtung 300 so betrieben, dass mit ihr eine Ansteuerung von Geräteeinrichtungen möglich ist. Hierzu wird über die Eingabeeinrichtung 370 ein Sprachsignal, das einen Befehl an eine zu steuernde Geräteeinrichtung 390b darstellt, eingegeben. Falls diesem eingegebenen Sprachsignal ein entsprechendes Sprachsignal aus der ersten Speichereinrichtung 320 zugeordnet werden kann, gibt die Sprachprozessoreinrichtung 310 ein entsprechendes Steuersignal an eine der Schnittstelleneinrichtungen 350a bis 350e aus, welche dieses an eine Schnittstelle der Geräteinrichtung 390b weiterleitet.

Neben der beschriebenen Ausführungsform sind wiederum eine Vielzahl von Abwandlungen möglich.

Beispielsweise lassen sich neben den dargestellten Eingabe- und Ausgabeeinrichtungen, die auch alternativ verwendet werden können, weitere bekannte Eingabe- und Ausgabeeinrichtungen einsetzen.

Anstelle der verschiedenen Schnittstelleneinrichtungen können auch verschiedene Schnittstelleneinrichtungen vom gleichen Typ verwendet werden. Insbesondere wenn vermieden werden soll, die Vorrichtung 300 an Kabel anzuschließen, bieten sich Funkschnittstellen oder Infrarotschnittstellen an.

Darüber hinaus können die beschriebenen Funkstrecken auch durch Kabelverbindungen ersetzt werden.

Obwohl die Mikrophoneinrichtung 373 und die Lautsprechereinrichtung 383 getrennt dargestellt sind, lassen sich beide Einrichtungen in einem Gerät, einem sogenannten Head-Set, vorsehen. Hierzu wird die Lautsprechereinrichtung in Form eines Ohrhörers ausgebildet.

Darüber hinaus wird auf die bereits beschriebenen Abwandlungen, die in der in Figur 3 gezeigten Ausführungsform analog einsetzbar sind, verwiesen.

In Figur 4 ist eine Ausführungsform einer Adaptereinrichtung 400 für eine Geräteeinrichtung, die durch die Vorrichtung nach Figur 3 ansteuerbar ist, dargestellt. Diese Vorrichtung umfasst eine Schnittstelle 451, die in Form einer Funkschnittstelle vorgesehen ist. Weiterhin weist die Adaptereinrichtung einen µ-Controller µC zur Steuerung der Adaptereinrichtung auf. In einer Speichereinrichtung 453 sind entsprechende für die anzusteuernde Geräteeinrichtung vorgesehen Steuercodes abgelegt. Darüber hinaus weist die Adaptereinrichtung 400 eine Treiberelektronik 452 auf, welche unter Steuerung durch den µ-Controller µC aus dem durch die Schnittstelle 451 empfangenen Signal und den Steuercodes aus der Speichereinrichtung 453 entsprechende Steuersignale SS für die Geräteeinrichtung erzeugt.

Die Adaptereinrichtung 400 kann als externes Gerät oder als Modul, das in das anzusteuernde Gerät einsetzbar ist, ausgebildet sein.

Die in Figur 4 dargestellte Adaptereinrichtung stellt lediglich eine mögliche Ausführungsform dar. Neben dieser Ausführungsform sind eine Vielzahl von Ausführungsformen möglich, die insbesondere den entsprechenden anzusteuernden Geräten angepasst sein können.

## Patentansprüche

1. Vorrichtung (100; 200; 300) mit
einer Sprachprozessoreinrichtung (110; 210; 310) zum Verarbeiten digitaler Sprachsignale,
einer ersten Speichereinrichtung (120; 220; 320), durch welche der Sprachprozessoreinrichtung die für die Verarbeitung der digitalen Sprachsignale erforderliche Information zur Verfügung stellbar ist, und
einer zweiten Speichereinrichtung (130; 230; 330), in der das Ergebnis der Verarbeitung der digitalen Sprachsignale abspeicherbar ist.

2. Vorrichtung nach Anspruch 1, in welcher
die Information in der ersten Speichereinrichtung (220; 320) digitale Sprachsignale umfasst, und
die Sprachprozessoreinrichtung (210; 310) so ausgebildet ist, dass sie ein eingegebenes digitales Sprachsignal (I) mit den digitalen Sprachsignalen in der ersten Speichereinrichtung (220; 320) vergleicht und das Ergebnis des Vergleichs in der zweiten Speichereinrichtung (230; 330) abspeichert.

3. Vorrichtung nach Anspruch 2, in welcher das eingegebene Sprachsignal in der zweiten Speichereinrichtung abgespeichert wird, wenn durch den Vergleich für das eingegebene digitale Sprachsignal kein entsprechendes digitales Sprachsignal in der ersten Speichereinrichtung ermittelt wird.

4. Vorrichtung nach Anspruch 2 oder 3, in welcher das eingegebene Sprachsignal in der zweiten Speichereinrichtung abgespeichert wird, wenn durch den Vergleich für das eingegebene digitale Sprachsignal ein entsprechendes digitales Sprachsignal in der ersten Speichereinrichtung auf geringem Konfidenzniveau ermittelt wird.

5. Vorrichtung nach einem der Ansprüche 2 bis 4, in welcher die Sprachprozessoreinrichtung so ausgebildet ist, dass zum Vergleichen eines eingegebenen Sprachsignals mit einem digitalen Sprachsignal in der ersten Speichereinrichtung ein Ähnlichkeitsmaß für die beiden Signale ermittelt wird, und das digitale Sprachsignal in der ersten Speichereinrichtung als ein dem eingegebenen digitalen Sprachsignal entsprechendes Signal identifiziert wird, wenn dieses Ähnlichkeitsmaß grösser als ein vorgegebener Wert ist.

6. Vorrichtung nach einem der Ansprüche 2 bis 5, in welcher die Sprachprozessoreinrichtung so ausgebildet ist, dass zum Vergleichen eines eingegebenen Sprachsignals mit einem digitalen Sprachsignal in der ersten Speichereinrichtung ein Ähnlichkeitsmaß für die beiden Signale ermittelt wird, und das digitale Sprachsignal in der ersten Speichereinrichtung als ein dem eingegebenen digitalen Sprachsignal ähnliches Signal identifiziert wird, wenn dieses Ähnlichkeitsmaß grösser als ein vorgegebener erster Wert und kleiner als ein vorgegebener zweiter Wert ist.

7. Vorrichtung nach einer der Ansprüche 2 bis 6, in welcher die Sprachprozessoreinrichtung so ausgebildet ist, dass zum Vergleich ein analysiertes eingegebenes digitales Sprachsignal verwendbar ist.

8. Vorrichtung nach einem der vorangegangenen Ansprüche, in welcher die Information in der ersten Speichereinrichtung (220; 320) benutzerunabhängige Information umfasst.

9. Vorrichtung nach einem der vorangegangenen Ansprüche, in welcher die benutzerunabhängige Information einen Wortschatz umfasst.

10. Vorrichtung nach Anspruch 8 oder 9, in welcher die Information benutzerabhängige Information umfasst.

11. Vorrichtung nach Anspruch 10, in welcher die erste Speichereinrichtung (320) einen ersten für benutzerunabhängige Information vorgesehenen Speicherabschnitt (321) und einen zweiten für benutzerabhängige Information vorgesehenen Speicherabschnitt (322) umfasst, wobei der erste Speicherabschnitt (321) und der zweite Speicherabschnitt (322) getrennt voneinander in die Vorrichtung einsetzbar und aus ihr entnehmbar vorgesehen sind.

12. Vorrichtung nach einem der vorangegangenen Ansprüche, in welcher die erste Speichereinrichtung in die Vorrichtung einsetzbar und aus ihr entnehmbar vorgesehen ist.

13. Vorrichtung nach einem der vorangegangenen Ansprüche, in welcher die erste Speichereinrichtung und die zweite Speichereinrichtung als eine Speichereinrichtung mit zwei entsprechenden Speicherabschnitten ausgebildet sind.

14. Vorrichtung nach einem der vorangegangenen Ansprüche, in welcher die Sprachprozessoreinrichtung durch einen DSP und/oder einen µ-Controller und/oder einen µ-Prozessor ausgebildet ist.

15. Vorrichtung nach einem der vorangegangenen Ansprüche, in welcher wenigstens eine Schnittstelle (250; 350a, 350b, 350c, 350d, 350e) zur Ausgabe des Ergebnisses der Verarbeitung der digitalen Sprachsignale zur weiteren Verarbeitung durch einen Benutzer vorgesehen ist.

16. Vorrichtung nach Anspruch 15, in welcher die wenigstens eine Schnittstelle durch eine serielle Schnittstelle ausgebildet ist.

17. Vorrichtung nach Anspruch 15 oder 16, in welcher die wenigstens eine Schnittstelle durch eine USB-, eine Infrarot-, vorzugsweise eine IrDA-, eine Funk-(350e), vorzugsweise eine Bluetooth-, eine Tastatur- und/oder eine RS232-Schnittstelle ausgebildet ist.

18. Vorrichtung nach einem der Ansprüche 15 bis 17 mit wenigstens zwei Schnittstellen, in welcher eine Schnittstellenauswahleinrichtung (360) vorgesehen ist.

19. Vorrichtung nach einem der Ansprüche 15 bis 18, in welcher die Schnittstelle so ausgebildet ist, dass sie ASCII-Signale ausgibt.

20. Vorrichtung nach einem der vorangegangenen Ansprüche, in welcher die erste Speichereinrichtung so vorgesehen ist, dass die für die Verarbeitung der digitalen Sprachsignale erforderliche Information veränderbar ist.

21. Vorrichtung nach einem der vorangegangenen Ansprüche, in welcher eine Eingabeeinrichtung (370) zur Eingabe von digitalen Sprachsignalen in die Sprachprozessoreinrichtung vorgesehen ist.

22. Vorrichtung nach Anspruch 21, in welcher die Eingabeeinrichtung eine A/D-Konvertereinrichtung (371) umfasst.

23. Vorrichtung nach Anspruch 21 oder 22, in welcher die Eingabeeinrichtung über eine Funkstrecke (372) mit der Sprachprozessoreinrichtung verbunden ist.

24. Vorrichtung nach einem der Ansprüche 21 bis 23, in welcher die Eingabeeinrichtung eine Mikrophoneinrichtung (373) umfasst.

25. Vorrichtung nach einem der vorangegangenen Ansprüche, in welcher wenigstens eine Ausgabeeinrichtung (380) zur Ausgabe von digitalen Sprachsignalen und/oder Informationssignalen aus der Sprachprozessoreinrichtung vorgesehen ist.

26. Vorrichtung nach Anspruch 25, in welcher die wenigstens eine Ausgabeeinrichtung (381) eine D/A-Konvertereinrichtung umfasst.

27. Vorrichtung nach Anspruch 25 oder 26, in welcher die wenigstens eine Ausgabeeinrichtung über eine Funkstrecke (382) mit der Sprachprozessoreinrichtung verbunden ist.

28. Vorrichtung nach einem der Ansprüche 25 bis 27, in welcher die wenigstens eine Ausgabeeinrichtung eine Lautsprechereinrichtung (383) umfasst.

29. Vorrichtung nach einem der Ansprüche 25 bis 28, in welcher die wenigstens Ausgabeeinrichtung eine Displayeinrichtung zur Ausgabe von Informationssignalen aus der Sprachprozessoreinrichtung umfasst.

30. Vorrichtung nach einem der vorangegangenen Ansprüche, in welcher die Sprachprozessoreinrichtung so ausgebildet ist, dass, falls für ein eingegebenes digitales Sprachsignal ein entsprechendes digitales Sprachsignal in der ersten Speichereinrichtung ermittelt wird, mindestens ein Steuersignal zur Ansteuerung wenigstens einer Geräteeinrichtung (390b) ausgegeben wird.

31. Vorrichtung nach Anspruch 30, in welcher Steuersignale (395) für wenigstens zwei Geräteeinrichtungen ausgebbar sind und eine Geräteauswahleinrichtung vorgesehen ist.

32. Vorrichtung nach Anspruch 30 oder 31, in welcher in der ersten Speichereinrichtung digitale Sprachsignale zur Steuerung der wenigstens einen Geräteeinrichtung gespeichert sind, und eine Treiberelektronikeinrichtung vorgesehen ist, die, falls in der ersten Speichereinrichtung ein entsprechendes digitales Sprachsignal ermittelt wird, entsprechende Steuersignale für die wenigstens eine Geräteeinrichtung ausgibt.

33. Vorrichtung nach einem der vorangegangenen Ansprüche, die tragbar ausgebildet ist.

34. Adaptereinrichtung für eine Geräteeinrichtung mit einer Treiberelektronik (452), die Steuersignale (SS) für die Geräteeinrichtung zur Verfügung stellt und so ausgebildet ist, dass sie durch eine Vorrichtung nach einem der vorangegangenen Ansprüche ansteuerbar ist.

35. Adaptereinrichtung nach Anspruch 34, die in Form eines in die Geräteeinrichtung einsetzbaren Moduls vorgesehen ist.

36. Adaptereinrichtung nach Anspruch 34 oder 35, die derart ausgelegt ist, dass sie Informationssignale von der Geräteeinrichtung aufnehmen kann.
